# EUROPEAN PATENT SPECIFICATION

(11) **EP 3 324 520 B1**
(45) Date of publication and mention of the grant of the patent: **28.09.2022**
(21) Application number: 15898164.7
(22) Date of filing: 16.12.2015
(51) Int. Cl.: H02K 9/06, H02P 6/18, A47L 9/28

(54) **HIGH-SPEED HALL-LESS THREE-PHASE VACUUM CLEANER MOTOR**
SCHNELLE HALLLOSER DREIPHASIGER STAUBSAUGERMOTOR
MOTEUR D'ASPIRATEUR TRIPHASÉ SANS CAPTEUR À EFFET HALL À GRANDE VITESSE

(30) Priority: 16.07.2015 CN 201510416438
(43) Date of publication of application: 23.05.2018
(73) Proprietor: Kingclean Electric Co., Ltd., Suzhou, Jiangsu 215009 (CN)
(72) Inventor: NI, Zugen, Suzhou Jiangsu 215009 (CN)
(74) Representative: Boult Wade Tennant LLP
(86) International application number: PCT/CN2015/097549
(87) International publication number: WO 2017/008439

(56) References cited:
- EP-A1- 1 978 631
- CN-A- 101 686 784
- CN-A- 104 967 253
- CN-U- 203 691 303
- CN-U- 204 206 039
- CN-Y- 201 307 782
- CN-Y- 201 355 796
- GB-A- 2 469 137
- JP-A- 2008 167 525
- US-A- 5 664 282
- US-A1- 2012 068 649

## Description

### TECHNICAL FIELD

The present application relates to a high-speed Hall sensor-less three-phase vacuum cleaner motor.

### BACKGROUND

Presently, vacuum cleaners gradually enter into thousands of households, and are used by more and more families in China. A conventional vacuum cleaner motor generally includes a series-excited vacuum cleaner motor and a small direct-current vacuum cleaner motor. A brush motor with a rotational speed of 20000-40000 rotations per minute is usually adopted. However, the brush motor has a large volume, a poor performance, a limited application range and a short service life, and is inconvenient to carry. And if a brushless motor is adopted, high-level hardware and circuit control are required, and mostly, a Hall element is adopted to detect a magnetic position to realize magnetic field oriented control. The Hall element in use often has the following problems: 1. the price is high and thus is difficult to be accepted by customers; 2. it is hard to install, and if being improperly installed, the Hall element is apt to be damaged to result in breakdown or poor start; 3. it is easy to introduce interference and decreased reliability because of an increase in interfaces and connecting lines between the motor and a control system; 4. it has severe service environment requirements, since the motor is vulnerable to damage in the environment with a high temperature, high humidity, serious vibration, dust or harmful chemicals; 5. it may increase the volume of the motor and demands a bigger motor space. Because of the above disadvantages, a Hall sensor-less structure motor is adopted to replace a Hall-structure motor.

However, due to the difficulty in Hall sensor-less technology, the Hall sensor-less motor in the current market has a low rotational speed, which is usually lower than 40000 rotations per minute. And moreover, the Hall sensor-less motor has a large commutation number, a large commutation loss and a complex stator structure, which is not convenient to wind.

There are two methods for cooling a circuit board of the conventional brushless motor in the market. One method for cooling is to adopt large cooling fins, and the other method for cooling is to adopt cooling fan blades. And the two methods for cooling both impose many restrictions on the structure of the brushless motor and are costly.
US-A-5,664,282 discloses a high speed Hall sensor-less three-phase vacuum cleaner motor in accordance with the precharacterizing portion of claim 1.

### SUMMARY

An object of the present application is to provide a high-speed Hall sensor-less three-phase vacuum cleaner motor to achieve a Hall sensor-less structure motor with a rotational speed greater than 80000 rotations per minute. And a super-high dust collection performance of the vacuum cleaner is achieved by applying the motor.

According to the present invention, there is provided a high-speed Hall sensor-less three-phase vacuum cleaner motor in accordance with claim 1.

Preferably, the Hall sensor-less circuit adopts an analog electronic circuit to detect a counter electromotive force of the motor, and the counter electromotive force acts as a feedback signal for a rotor magnetic pole position.

Preferably, the motor further includes: an iron core with a central circle, a rotor running through the central circle, a first end cap for fixing one end of the iron core, a second end cap mating with the first end cap and fixing another end of the iron core, a movable impeller located at one side of the second end cap and driven by the rotor, an impeller cover receiving the movable impeller and fixed on the second end cap, and a fixed impeller located between the second end cap and the movable impeller

The high-speed Hall sensor-less three-phase vacuum cleaner motor may optionally further include: an iron core with a central circle, a rotor running through the central circle, a first end cap for fixing one end of the iron core, a second end cap mating with the first end cap and fixing the other end of the iron core, a movable impeller located at one side of the second end cap and driven by the rotor, an impeller cover receiving the movable impeller and fixed on the second end cap, and a fixed impeller located between the second end cap and the movable impeller.

Preferably, the iron core includes a circular iron core outer edge and a plurality of protrusions formed by an inner wall of the iron core outer edge radially extending to the center. A pole shoe is provided at one end near the center of each protrusion, and a pole shoe angle a of each pole shoe is within the scope of 90 to 100 degrees.

Preferably, arcs of the pole shoes are in the same center circle, and a diameter of the center circle ranges from 10 to 15 millimeter. A unilateral air gap between each pole shoe and the rotor is 0.5 millimeter.

Preferably, an outer wall of the iron core outer edge protrudes outwards to form a plurality of flanges. The flanges are corresponding to the respective protrusions, and are each provided with a location hole and a screw hole next to the location hole. Centers of the location hole and the screw are in the same circle.

Preferably, the first end cap includes end cap outer edge, a supporting portion connected to the end cap outer edge, and multiple cooling gaps between the end cap outer edge and the supporting portion. The supporting portion includes a center having an axle hole and a plurality of supporting arms. Each supporting arm has one end connected to the center and another end connected to the end cap outer edge. The cooling gaps are at least partially aligned to arc-shaped gaps in the axial direction.

Preferably, the circuit board includes a plurality of MOS tubes located in the cooling gaps.

Preferably, the Hall sensor-less circuit comprises: a controller, a power supply unit that provides power to the controller, a pre-drive unit connected to an output end of the controller, a three-phase bridge power circuit unit connected to an output end of the pre-drive unit and the motor, and a current sampling unit arranged between the controller and the three-phase bridge power circuit unit.

The present application has the following advantages.

Since the Hall sensor-less circuit board structure cooled by wind outputted by the motor is adopted, the structure is simple, the appearance is beautiful and the reliability is high. Moreover, for the commutation number of the electronic elements is decreased, the commutation loss of the electronic elements is reduced. And the stator structure is simple and winding is convenient, therefore the efficiency of production is increased. The high-speed Hall sensor-less three-phase vacuum cleaner motor also has advantages such as a high rotational speed, a small size, a high performance, being convenient to carry, energy-saving, a long service life and so on. Thus a super-high dust collection performance may be achieved if the motor is applied to a vacuum cleaner.

### BRIEF DESCRIPTION OF THE DRAWINGS

To illustrate the present application more clearly, drawings to be used in the descriptions of the embodiments are described briefly hereinafter.
Figure 1 is an exploded view of a high-speed Hall sensor-less three-phase vacuum cleaner motor according to the present application;
Figure 2 is a sectional view of an assembled high-speed Hall sensor-less three-phase vacuum cleaner motor according to the present application;
Figure 3 is a top view of an iron core of the high-speed Hall sensor-less three-phase vacuum cleaner motor according to the present application;
Figure 4 is a perspective view of an iron core of a high-speed Hall sensor-less three-phase vacuum cleaner motor according to the present application in another view, in which a circuit board is removed;
Figure 5 is a perspective view of an iron core of a high-speed Hall sensor-less three-phase vacuum cleaner motor according to the present application;
Figure 6 is a perspective view of a circuit board according to the present application;
Figure 7 is a schematic circuit diagram of a Hall sensor-less circuit according to the present application;
Figure 8 is an experimental data graph when a pole shoe angle of the iron core according to the present application is 85 degrees;
Figure 9 is an experimental data graph when a pole shoe angle of the iron core according to the present application is 92 degrees;
Figure 10 is an experimental data graph when a pole shoe angle of the iron core according to the present application is 98 degrees; and
Figure 11 is an experimental data graph when a pole shoe angle of the iron core according to the present application is 105 degrees.

### DETAILED DESCRIPTION OF THE EMBODIMENTS

### Embodiments

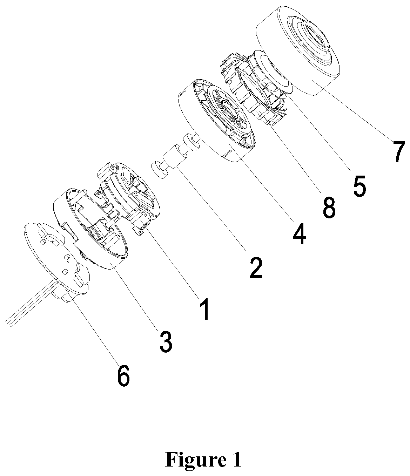

As shown in Figure 1-5, a high-speed Hall sensor-less three-phase vacuum cleaner motor is provided according to an embodiment of the present application. Preferably, the motor is a brushless direct-current motor. And the motor includes: an iron core 1 with a central circle 18, a rotor 2 running through the central circle 18, a first end cap 3 for fixing one end of the iron core 1, a second end cap 4 mating with the first end cap 3 and fixing the other end of the iron core 1, a movable impeller 5 located at one side of the second end cap 4 and driven by the rotor 2, an impeller cover 7 receiving the movable impeller 5 and fixed on the second end cap 4, a fixed impeller 8 located between the second end cap 4 and the movable impeller 5, and a circuit board 6 located outside of the first end cover 3. The circuit board 6 is provided with a Hall sensor-less circuit cooled by wind outputted by the motor and the rotational speed of the motor controlled by the Hall sensor-less circuit is higher than 80000 rotations per minute. The diameter of the center circle ranges from 10 to 15 millimeters. A unilateral air gap between each pole shoe and the rotor 2 is 0.5 millimeter.

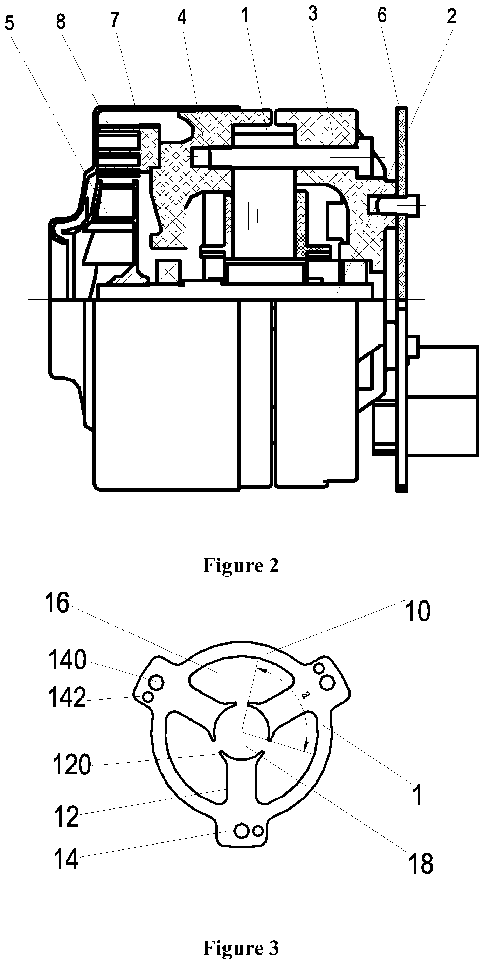

Referring to Figure 3, the iron core 1 includes a circular iron core outer edge 10, a plurality of protrusions 12 formed by an inner wall of the iron core outer edge 10 extending radially to the center, and a plurality of flanges 14 formed by an outer wall of the iron core outer edge 10 protruding outwards. A pole shoe 120 is provided at one end of each protrusion 12, and an angle of each pole shoe 120 is within the scope of 90-100 degrees. The arc of each pole shoe 120 is in the same center circle 18 to decrease the commutation loss of electronic elements. An arc-shaped gap 16 is formed between two adjacent protrusions 12. The flange 14 is provided with a screw hole 140 and a location hole 142 adjacent to the screw hole 140, and circle centers of the screw hole 140 and the location hole 142 are in the same circle. The number of the protrusions 12 is preferably 3, and an angle between central points of two adjacent protrusions 12 in circumferential direction is 120 degrees. The number of flanges 14 is preferably 3, and the central line of the flange 14 and the central line of the corresponding protrusion 12 are in the same straight line. The screw hole 140 and the location hole 142 are used for installation and positioning of the iron core. The screw hole 140 is independent from a magnetic circuit of the iron core, thus it may not adversely affect the magnetic circuit and loss of the iron core.

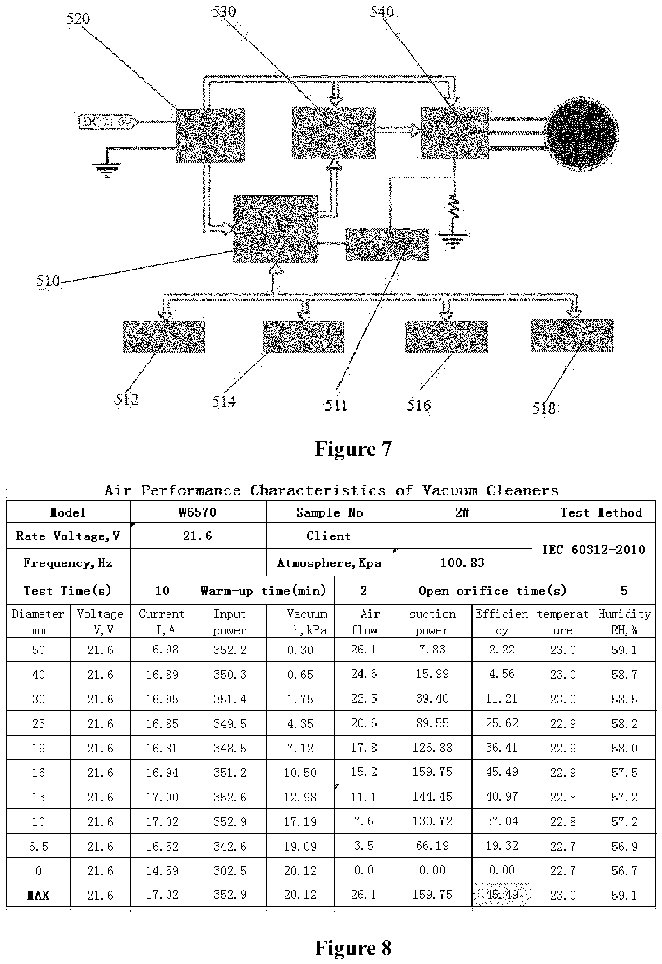

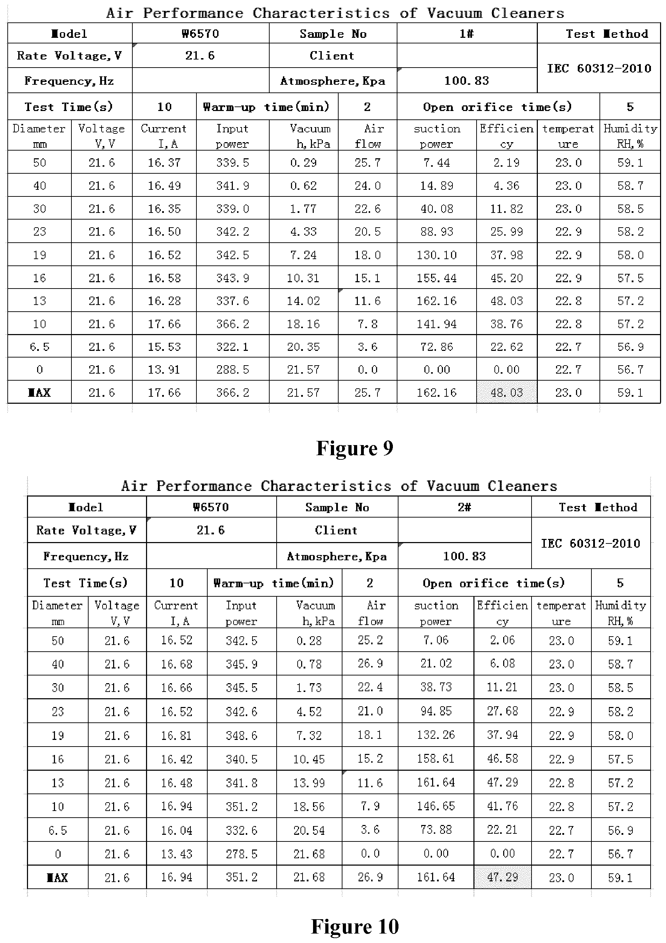

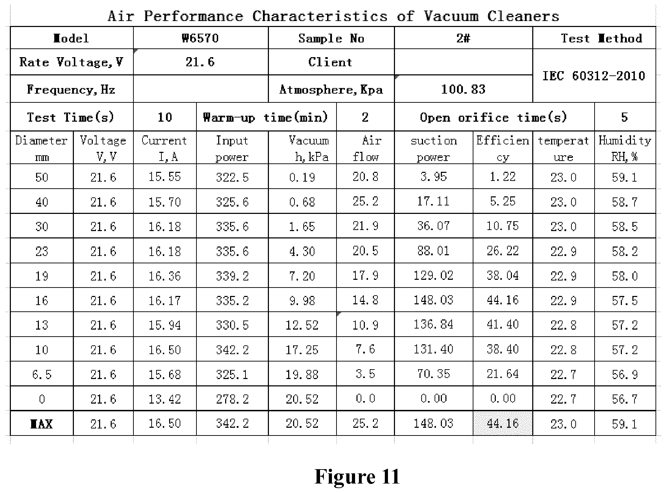

To further demonstrate the effectiveness and progressiveness of selecting a pole shoe angle a of the pole shoe 120 among 90-100 degrees, inventors perform comparative experiments by selecting a pole shoe angle as 85 degrees, 92 degrees, 98 degrees and 105 degrees based on experimental methods described in IEC standards 60312-20000. Relevant experimental data table are shown in Figures 8-11, from which we can see the obtained maximum efficiencies of the motor are 45.49, 48.03, 47.29 and 44.16 respectively. Therefore it is illustrated that the motor is more efficient when a pole shoe angle a is within the scope of 90-100 degrees.

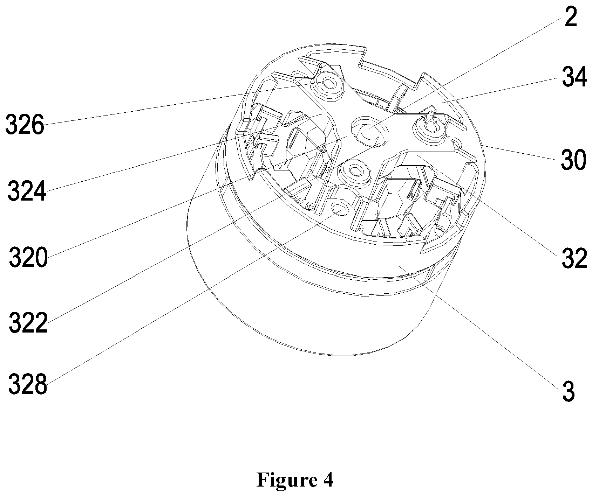

Referring to Figure 4, the first end cap 3 includes: a circular end cap outer edge 30, a supporting portion 32 connected to the end cap outer edge 30, and a plurality of cooling gaps 34 located between the end cap outer edge 30 and the supporting portion 32. The supporting portion 32 includes a center 320 having an axle hole 322 and a plurality of supporting arms 324. One end of each supporting arm 324 is connected to the center 320 and the other end of the supporting arm 324 is connected to the end cap outer edge 30. The rotor 2 is allowed to pass through the axle hole 322. A cooling gap 334 is formed between two adjacent supporting arms 324. Each supporting arm 324 is provided with a circuit board screw hole 326 and an end cap screw hole 322. There is a step between the planes where the circuit board screw hole 326 and the end cap screw hole 322 are located. The screw hole 140 and the end cap screw hole 322 are in the same direction to achieve fixed connection of the first end cap 3, the second end cap 4 and the iron core 1 through a long screw. The number of the supporting arms 324 is preferably 3. And an axial direction of the supporting arm 324 is substantially corresponding to the protrusion 12 of the iron core 1. The cooling gap 34 is an air outlet of the motor, and the cooling gap 34 is aligned to the arc-shaped gap 16 in the axial direction, thus preventing the case that the cooling air, due to being blocked by the supporting arm, cannot blow to a MOS tube on the circuit board 6 to adversely affect the heat dissipation. Moreover, the structure is simple and the size of the motor is reduced without increasing the cost.

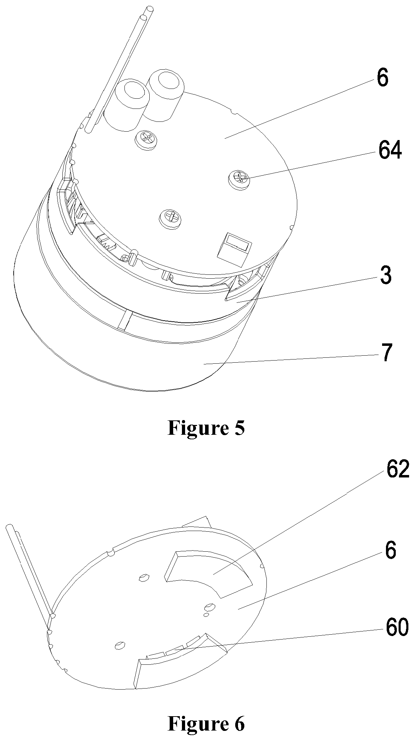

Referring to Figures 5 and 6, a circuit board 6 includes: a plurality of MOS tubes 60 arranged in the cooling gaps 34, one or more cooling fins 62 covering the MOS tubes 60, and a screw 64 that is fixed to the end cap screw hole 322 and used for fixing the circuit board 6 on the first end cap 3. Hence heating elements such as the MOS tube are arranged at the air outlet of the motor for cooling, and the cooling fin with a thickness of 2 millimeters is provided on the MOS tube for better cooling.

Referring to Figure 7, a Hall sensor-less circuit is also called a motor control circuit. By adopting an analog electronic control circuit to detect a counter electromotive force of the motor and adopting the counter electromotive force, instead of signal of the Hall sensor, as a feedback signal for a magnetic position of the rotor, a motor with a Hall sensor-less structure is achieved. The Hall sensor-less circuit includes: a controller 510, a power supply unit 520 that provides power to the controller 510, a pre-drive unit 520 connected to an output end of the controller 510, a three-phase bridge power circuit unit 530 that connected to an output end of the pre-drive unit 520 and a motor BLDC, a current sampling unit 511 arranged between the controller 510 and the three-phase bridge power circuit unit 530, a voltage sampling unit 512 bi-directionally connected to the controller 510, a speed control unit 514 bi-directionally connected to the controller 510, a motor control unit 516 bi-directionally connected to the controller 510, and a temperature sampling unit 516 bi-directionally connected to the controller 510. The three-phase bridge power circuit unit 530 includes multiple MOS tubes 60. The power supply unit 520 provides power to the pre-drive unit 520 and the three-phase bridge power circuit unit 530 respectively, with an input direct-current voltage being 21.6V. The pre-drive unit 520 converts PWM signals outputted by the controller 510 into signals which have enough drive capability and are suitable for driving a three-phase bridge. The three-phase bridge power circuit unit 530 is a power converting unit controlled by the pre-drive unit 520, and is used for driving the motor BLDC to operate normally. The controller 510, as a core unit of the motor controller, receives UI input circuit signals (such as speed adjusting control, start-stop control), detects working environment (such as working current, working voltage, ambient temperature), and outputs suitable PWM control signals according to UI input and environment input conditions. The current sampling unit 511 detects the working current of the whole circuit in real-time to realize over-current protection and load short-circuit protection. The voltage sampling unit 512 detects the working voltage of the whole circuit in real-time to realize over-voltage/under-voltage protection. The speed control unit 514 is a UI control circuit for controlling the motor to operate in a high-speed or low-speed mode. The motor control unit 516 is a UI control circuit for controlling the motor to start or stop. The temperature sampling unit 516 detects ambient working temperature in real-time to realize temperature protection.

## Claims

1. A high-speed Hall sensor-less three-phase vacuum cleaner motor,
**characterized in that**,
the high-speed Hall sensor-less three-phase vacuum cleaner motor comprises a Hall sensor-less circuit cooled by wind outputted by the motor, and a rotational speed of the motor controlled by the Hall sensor-less circuit is greater than 80000 rotations per minute; and
a circuit board (6) is located outside of a first end cap (3) and is provided with the Hall sensor-less circuit, and the first end cap (3) is arranged at an air outlet of the motor for cooling.

2. The high-speed Hall sensor-less three-phase vacuum cleaner motor according to claim 1, wherein an analog electronic circuit is adopted in the Hall sensor-less circuit to detect a counter electromotive force of the motor, and the counter electromotive force acts as a feedback signal for a rotor magnetic pole position.

3. The high-speed Hall sensor-less three-phase vacuum cleaner motor according to claim 2, wherein the motor further comprises:
an iron core (1) with a central circle,
a rotor (2) running through the central circle,
the first end cap (3) for fixing one end of the iron core (1),
a second end cap (4) mating with the first end cap (3) and fixing another end of the iron core (1),
a movable impeller (5) located at one side of the second end cap (4) and driven by the rotor (2),
an impeller cover (7) receiving the movable impeller (5) and fixed on the second end cap (4),
a fixed impeller (8) located between the second end cap (4) and the movable impeller (5)

4. The high-speed Hall sensor-less three-phase vacuum cleaner motor according to claim 1, wherein the high-speed Hall sensor-less three-phase vacuum cleaner motor further comprises:
an iron core (1) with a central circle,
a rotor (2) running through the central circle,
the first end cap (3) for fixing one end of the iron core (1),
a second end cap (4) mating with the first end cap (3) and fixing another end of the iron core (1),
a movable impeller (5) located at one side of the second end cap (4) and driven by the rotor (2),
an impeller cover (7) receiving the movable impeller (5) and fixed on the second end cap (4),
a fixed impeller (8) located between the second end cap (4) and the movable impeller (5)

5. The high-speed Hall sensor-less three-phase vacuum cleaner motor according to claim 4, wherein the iron core (1) comprises a circular iron core outer edge (10) and a plurality of protrusions (12) formed by an inner wall of the iron core outer edge (10) radially extending to the center, a pole shoe (120) is provided at one end close to the center of each protrusion, and a pole shoe (120) angle a of each pole shoe (120) is within the scope of 90-100 degrees, and an arc-shaped gap is formed between two adjacent protrusions (12).

6. The high-speed Hall sensor-less three-phase vacuum cleaner motor according to claim 5, wherein arcs of the pole shoes (120) are in a same center circle, a diameter of the center circle ranges from 10 to 15 millimeters, and a unilateral air gap between each pole shoe (120) and the rotor (2) is 0.5 millimeter.

7. The high-speed Hall sensor-less three-phase vacuum cleaner motor according to claim 5 or 6, wherein an outer wall of the iron core outer edge (10) protrudes outwards to form a plurality of flanges (14), the flanges (14) are corresponding to respective protrusions (12) and are each provided with a location hole and a screw hole (140) adjacent to the location hole, and centers of the location hole and the screw hole (140) are in a same circle.

8. The high-speed Hall sensor-less three-phase vacuum cleaner motor according to claim 5, wherein the first end cap (3) comprises: an end cap outer edge (30), a supporting portion (32) connected to the end cap outer edge (30), and a plurality of cooling gaps between the end cap outer edge (30) and the supporting portion (32);
the supporting portion (32) comprises a center having an axle hole (322) and a plurality of supporting arms each having one end connected to the center and another end connected to the end cap outer edge (30), and the cooling gaps are at least partially aligned to arc-shaped gaps in the axial direction.

9. The high-speed Hall sensor-less three-phase vacuum cleaner motor according to claim 8, wherein the circuit board (6) comprises a plurality of MOS tubes located in the cooling gaps.

10. The high-speed Hall sensor-less three-phase vacuum cleaner motor according to claim 4, 5, 6, 8 or 9, wherein the Hall sensor-less circuit comprises: a controller (510), a power supply unit (520) that provides power to the controller (510), a pre-drive unit (520) connected to an output end of the controller (510), a three-phase bridge power circuit unit connected to an output end of the pre-drive unit (520) and the motor, and a current sampling unit (511) arranged between the controller (510) and the three-phase bridge power circuit unit.

## Patentansprüche

1. Hochgeschwindigkeits-Drehstrom-Staubsaugermotor ohne Hall-Sensor,
**dadurch gekennzeichnet, dass**
der Hochgeschwindigkeits-Drehstrom-Staubsaugermotor ohne Hall-Sensor eine Schaltung ohne Hall-Sensor umfasst, welche durch von dem Motor ausgegebenem Wind gekühlt wird, und eine Drehzahl des Motors, welche durch die Schaltung ohne Hall-Sensor gesteuert wird, größer als 80000 Umdrehungen pro Minute ist; und
eine Leiterplatte (6) außerhalb einer ersten Endkappe (3) angeordnet ist und mit der Schaltung ohne Hall-Sensor bereitgestellt ist und die erste Endkappe (3) an einem Luftauslass des Motors zum Kühlen angeordnet ist.

2. Hochgeschwindigkeits-Drehstrom-Staubsaugermotor ohne Hall-Sensor nach Anspruch 1, wobei eine analoge elektronische Schaltung in der Schaltung ohne Hall-Sensor aufgenommen ist, um eine gegenelektromotorische Kraft des Motors zu detektieren, und wobei die gegenelektromotorische Kraft als ein Rückkopplungssignal für eine magnetische Rotorpolposition wirkt.

3. Hochgeschwindigkeits-Drehstrom-Staubsaugermotor ohne Hall-Sensor nach Anspruch 2, wobei der Motor ferner umfasst:
einen Eisenkern (1) mit einem zentralen Kreis,
einen Rotor (2), welcher durch den zentralen Kreis läuft,
die erste Endkappe (3) zum Fixieren eines Endes des Eisenkerns (1),
eine zweite Endkappe (4), welche mit der ersten Endkappe (3) zusammenpasst und ein anderes Ende des Eisenkerns (1) fixiert,
ein bewegliches Flügelrad (5), welches an einer Seite der zweiten Endkappe (4) angeordnet ist und von dem Rotor (2) angetrieben wird,
eine Flügelradabdeckung (7), welche das bewegliche Flügelrad (5) aufnimmt und an der zweiten Endkappe (4) fixiert ist,
ein fixiertes Flügelrad (8), welches zwischen der zweiten Endkappe (4) und dem beweglichen Flügelrad (5) angeordnet ist.

4. Hochgeschwindigkeits-Drehstrom-Staubsaugermotor ohne Hall-Sensor nach Anspruch 1, wobei der Hochgeschwindigkeits-Drehstrom-Staubsaugermotor ohne Hall-Sensor ferner umfasst:
einen Eisenkern (1) mit einem zentralen Kreis,
einen Rotor (2), welcher durch den zentralen Kreis läuft,
die erste Endkappe (3) zum Fixieren eines Endes des Eisenkerns (1),
eine zweite Endkappe (4), welche mit der ersten Endkappe (3) zusammenpasst und ein anderes Ende des Eisenkerns (1) fixiert,
ein bewegliches Flügelrad (5), welches an einer Seite der zweiten Endkappe (4) angeordnet ist und von dem Rotor (2) angetrieben wird,
eine Flügelradabdeckung (7), welche das bewegliche Flügelrad (5) aufnimmt und an der zweiten Endkappe (4) fixiert ist,
ein fixiertes Flügelrad (8), welches zwischen der zweiten Endkappe (4) und dem beweglichen Flügelrad (5) angeordnet ist.

5. Hochgeschwindigkeits-Drehstrom-Staubsaugermotor ohne Hall-Sensor nach Anspruch 4, wobei der Eisenkern (1) einen kreisförmigen Eisenkernaußenrand (10) und eine Mehrzahl von Vorsprüngen (12) umfasst, welche durch eine Innenwand des Eisenkernaußenrands (10) gebildet sind, welche sich radial zu der Mitte erstreckt, wobei ein Polschuh (120) an einem Ende in der Nähe der Mitte jedes Vorsprungs bereitgestellt ist und wobei ein Polschuh- (120) Winkel a jedes Polschuhs (120) innerhalb des Bereichs von 90-100 Grad liegt und wobei ein bogenförmiger Spalt zwischen zwei benachbarten Vorsprüngen (12) gebildet ist.

6. Hochgeschwindigkeits-Drehstrom-Staubsaugermotor ohne Hall-Sensor nach Anspruch 5, wobei Bögen der Polschuhe (120) in einem gleichen Mittelkreis liegen, wobei ein Durchmesser des Mittelkreises von 10 bis 15 Millimeter reicht und wobei ein einseitiger Luftspalt zwischen jedem Polschuh (120) und dem Rotor (2) 0,5 Millimeter beträgt.

7. Hochgeschwindigkeits-Drehstrom-Staubsaugermotor ohne Hall-Sensor nach Anspruch 5 oder 6, wobei eine Außenwand des Eisenkernaußenrands (10) derart nach außen vorsteht, dass sie eine Mehrzahl von Flanschen (14) bildet, wobei die Flansche (14) jeweiligen Vorsprüngen (12) entsprechen und jeweils mit einem Aufnahmeloch und einem dem Aufnahmeloch benachbarten Schraubenloch (140) bereitgestellt sind, und wobei Zentren des Aufnahmelochs und des Schraubenlochs (140) auf einem gleichen Kreis liegen.

8. Hochgeschwindigkeits-Drehstrom-Staubsaugermotor ohne Hall-Sensor nach Anspruch 5, wobei die erste Endkappe (3) umfasst: einen Endkappenaußenrand (30), einen Halterungsabschnitt (32), welcher mit dem Endkappenaußenrand (30) verbunden ist, und eine Mehrzahl von Kühlspalten zwischen dem Endkappenaußenrand (30) und dem Halterungsabschnitt (32);
wobei der Halterungsabschnitt (32) ein Zentrum umfasst, welches ein Achsenloch (322) aufweist, und eine Mehrzahl von Halterungsarmen umfasst, von welchen jeweils ein Ende mit dem Zentrum verbunden ist und ein anderes Ende mit dem Endkappenaußenrand (30) verbunden ist, und wobei die Kühlspalte in der axialen Richtung wenigstens teilweise zu bogenförmigen Spalten ausgerichtet sind.

9. Hochgeschwindigkeits-Drehstrom-Staubsaugermotor ohne Hall-Sensor nach Anspruch 8, wobei die Leiterplatte (6) eine Mehrzahl von MOS-Rohren umfasst, welche in den Kühlspalten angeordnet sind.

10. Hochgeschwindigkeits-Drehstrom-Staubsaugermotor ohne Hall-Sensor nach Anspruch 4, 5, 6, 8 oder 9, wobei die Schaltung ohne Hall-Sensor umfasst: eine Steuerung (510), eine Energieversorgungseinheit (520), welche der Steuerung (510) Energie bereitstellt, eine Vorantriebseinheit (520), welche mit einem Ausgangsende der Steuerung (510) verbunden ist, eine Drehstrom-Brückenenergieschaltungseinheit, welche mit einem Ausgangsende der Vorantriebseinheit (520) und dem Motor verbunden ist, und eine Stromprobenahmeeinheit (511), welche zwischen der Steuerung (510) und der Drehstrom-Brückenenergieschaltungseinheit angeordnet ist.

## Revendications

1. Moteur d'aspirateur triphasé sans capteur à effet Hall à grande vitesse, **caractérisé en ce que**,
le moteur d'aspirateur triphasé sans capteur à effet Hall à grande vitesse comprend un circuit sans capteur à effet Hall refroidi par le vent délivré en sortie par le moteur, et une vitesse de rotation du moteur commandée par le circuit sans capteur à effet Hall est supérieure à 80000 rotations par minute ; et
une carte de circuit imprimé (6) est située à l'extérieur d'un premier capuchon d'extrémité (3) et est pourvue du circuit sans capteur à effet Hall, et le premier capuchon d'extrémité (3) est agencé au niveau d'une sortie d'air du moteur pour le refroidissement.

2. Moteur d'aspirateur triphasé sans capteur à effet Hall à grande vitesse selon la revendication 1, dans lequel un circuit électronique analogique est adopté dans le circuit sans capteur à effet Hall pour détecter une force contre-électromotrice du moteur, et la force contre-électromotrice agit comme un signal de rétroaction pour une position de pôle magnétique de rotor.

3. Moteur d'aspirateur triphasé sans capteur à effet Hall à grande vitesse selon la revendication 2, dans lequel le moteur comprend en outre :
un noyau de fer (1) avec un cercle central,
un rotor (2) s'étendant à travers le cercle central,
le premier capuchon d'extrémité (3) pour fixer une extrémité du noyau de fer (1),
un deuxième capuchon d'extrémité (4) s'accouplant avec le premier capuchon d'extrémité (3) et fixant une autre extrémité du noyau de fer (1),
une roue mobile (5) située d'un côté du deuxième capuchon d'extrémité (4) et entraînée par le rotor (2),
un couvercle de roue (7) recevant la roue mobile (5) et fixé sur le deuxième capuchon d'extrémité (4),
une roue fixe (8) située entre le deuxième capuchon d'extrémité (4) et la roue mobile (5).

4. Moteur d'aspirateur triphasé sans capteur à effet Hall à grande vitesse selon la revendication 1, dans lequel le moteur d'aspirateur triphasé sans capteur à effet Hall à grande vitesse comprend en outre :
un noyau de fer (1) avec un cercle central,
un rotor (2) s'étendant à travers le cercle central,
le premier capuchon d'extrémité (3) pour fixer une extrémité du noyau de fer (1),
un deuxième capuchon d'extrémité (4) s'accouplant avec le premier capuchon d'extrémité (3) et fixant une autre extrémité du noyau de fer (1),
une roue mobile (5) située d'un côté du deuxième capuchon d'extrémité (4) et entraînée par le rotor (2),
un couvercle de roue (7) recevant la roue mobile (5) et fixé sur le deuxième capuchon d'extrémité (4),
une roue fixe (8) située entre le deuxième capuchon d'extrémité (4) et la roue mobile (5).

5. Moteur d'aspirateur triphasé sans capteur à effet Hall à grande vitesse selon la revendication 4, dans lequel le noyau de fer (1) comprend un bord externe de noyau de fer circulaire (10) et une pluralité de saillies (12) formées par une paroi interne du bord externe de noyau de fer (10) s'étendant radialement vers le centre, un épanouissement polaire (120) est prévu au niveau d'une extrémité proche du centre de chaque saillie, et un angle a d'un épanouissement polaire (120) de chaque épanouissement polaire (120) se situe dans la plage allant de 90 à 100 degrés, et un espace en forme d'arc est formé entre deux saillies adjacentes (12).

6. Moteur d'aspirateur triphasé sans capteur à effet Hall à grande vitesse selon la revendication 5, dans lequel les arcs des épanouissements polaires (120) sont dans un même cercle central, un diamètre du cercle central se trouve dans une plage allant de 10 à 15 millimètres, et un entrefer unilatéral entre chaque épanouissement polaire (120) et le rotor (2) est de 0,5 millimètre.

7. Moteur d'aspirateur triphasé sans capteur à effet Hall à grande vitesse selon la revendication 5 ou 6, dans lequel une paroi externe du bord externe de noyau de fer (10) fait saillie vers l'extérieur pour former une pluralité de brides (14), les brides (14) correspondent à des saillies respectives (12) et sont chacune pourvues d'un trou de positionnement et d'un trou de vis (140) adjacent au trou de positionnement, et les centres du trou de positionnement et du trou de vis (140) sont dans un même cercle.

8. Moteur d'aspirateur triphasé sans capteur à effet Hall à grande vitesse selon la revendication 5, dans lequel le premier capuchon d'extrémité (3) comprend : un bord externe de capuchon d'extrémité (30), une partie de support (32) reliée au bord externe de capuchon d'extrémité (30) et une pluralité d'espaces de refroidissement entre le bord externe de capuchon d'extrémité (30) et la partie de support (32) ;
la partie de support (32) comprend un centre ayant un trou d'axe (322) et une pluralité de bras de support ayant chacun une extrémité reliée au centre et une autre extrémité reliée au bord externe de capuchon d'extrémité (30), et les espaces de refroidissement sont au moins partiellement alignés avec des espaces en forme d'arc dans la direction axiale.

9. Moteur d'aspirateur triphasé sans capteur à effet Hall à grande vitesse selon la revendication 8, dans lequel la carte de circuit imprimé (6) comprend une pluralité de tubes MOS situés dans les espaces de refroidissement.

10. Moteur d'aspirateur triphasé sans capteur à effet Hall à grande vitesse selon la revendication 4, 5, 6, 8 ou 9, dans lequel le circuit sans capteur à effet Hall comprend : un dispositif de commande (510), une unité d'alimentation en puissance (520) qui fournit une puissance au dispositif de commande (510), une unité de pré-attaque (520) reliée à une extrémité de sortie du dispositif de commande (510), une unité de circuit de puissance en pont triphasé reliée à une extrémité de sortie de l'unité de pré-attaque (520) et au moteur, et une unité d'échantillonnage de courant (511) agencée entre le dispositif de commande (510) et l'unité de circuit de puissance en pont triphasé.
